# NEUE EUROPÄISCHE PATENTSCHRIFT

(11) **EP 1 526 620 B3**
(45) Veröffentlichungstag dieser Patentschrift: **10.04.2013**
(45) Hinweis auf die Patenterteilung: 24.10.2007
(21) Anmeldenummer: 04017276.9
(22) Anmeldetag: 22.07.2004
(51) Int. Cl.: H02G 15/04, H02G 3/06

(54) **Kabelverschraubung mit variablem Schirmkontaktelement**
Cable gland with variable screen contact element
Presse-étoupe de câble à élément de contact de blindage variable

(30) Priorität: 24.10.2003 DE 10349781
(43) Veröffentlichungstag der Anmeldung: 27.04.2005
(73) Patentinhaber: Bimed Teknik A.S., 34900 Büyükcekmece / Istanbul (TR)
(72) Erfinder: Albukrek, Yilmaz, Yesilköy Istanbul (TR); Kempf, Klaus, Dr., 70563 Stuttgart (DE)
(74) Vertreter: Dreiss

(56) Entgegenhaltungen:
- EP-B- 0 901 209

## Beschreibung

Die Erfindung betrifft eine Kabelverschraubung mit den Merkmalen des Oberbegriffs des Patentanspruchs 1. Eine derartige Kabelverschraubung ist aus der EP 0 901 209 B1 bekannt. Bei der dort offenbarten Kabelverschraubung weist der Stutzen eine konische Wirkfläche auf, die zumindest dann, wenn das Druckelement mit dem Stutzen verschraubt ist, derartig auf das zweite Ende der Kontaktbügel einwirkt, dass diese radial nach innen bewegt werden. Dabei kontaktieren die Kontaktbügel mit ihrem zweiten Ende den Schirm- oder Erdungskontakt des Kabels. Der Bereich, den die Kontaktbügel dabei in radialer Richtung überstreichen, wird nachfolgend als Schirmkontaktbereich bezeichnet. Die Kontaktbügel weisen jeweils an ihrem zweiten Ende einen radial nach außen gerichteten Vorsprung auf, dessen radial außen liegender Randbereich an der konischen Wirkfläche anliegt.

Die aus der EP 0 901 209 B1 bekannte Kabelverschraubung erleichtert das Einführen eines Kabels in die Kabelverschraubung dadurch, dass die Kontaktbügel nur mit geringer Kraft auf die Kabelisolierung bzw. den Schirm- oder Erdungskontakt des eingeführten Kabels einwirken, solange das Druckelement nicht fest mit dem Stutzen verschraubt ist. Nachteilig bei dieser Kabelverschraubung ist jedoch der geringe Schirmkontaktbereich der Kontaktbügel. Der obere Klemmbereich einer Kabelverschraubung wird durch die lichte Weite des Dichtungselements bestimmt. Der untere Klemmbereich dagegen durch die Elastizität und den Schirmkontaktbereich der Kontaktbügel. Durch den oberen und den unteren Klemmbereich werden die Durchmesser der Kabel vorgegeben, für die die Kabelverschraubung eingesetzt werden kann. Daraus ergibt sich, dass die Kabelverschraubung der bekannten Art nur für Kabel mit nahezu gleichen Durchmessern eingesetzt werden kann. Ein- und dieselbe bekannte Kabelverschraubung kann nicht für Kabel mit deutlich verschiedenen Durchmessern verwendet werden.

Ebenfalls nachteilig bei der bekannten Kabelverschraubung ist der Wirkzusammenhang zwischen der durch das Druckelement erzielbaren Druckentlastung eines in die Verschraubung eingeführten Kabels und der erzielbaren Kontaktierungskräfte, mit denen die Kontaktbügel gegen Schirm- oder Erdungskontakt des eingeführten Kabels gedrückt werden. Wenn eine hohe Druckentlastung gewünscht ist, führt dies zwangsläufig auch zu hohen Kontaktierungskräften, die zu einer Beschädigung der Kontaktbügel und/oder des Schirm- oder Erdungskontakt führen können.

Ein weiterer Nachteil der bekannten Kabelverschraubung ist darin zu sehen, dass die Wirkfläche unmittelbar auf das zweite Ende der Kontaktbügel wirkt und die scharfe Außenkante zwischen dem Kontaktbügel und dem radial nach außen gerichteten Vorsprung an dem zweiten Ende des Kontaktbügels durch Aufschrauben des Druckelements auf den Stutzen in den Schirm- oder Erdungskontakt des eingeführten Kabels einschneidet. Der radial nach außen gerichtete Vorsprung des Kontaktbügels wird durch Aufschrauben des Druckelements in Längsrichtung druckbeaufschlagt, so dass nahezu die gesamte Kraft der konischen Wirkfläche über den radialen Vorsprung auf die scharfe Kante einwirkt und zu einer Beschädigung des Schirm- oder Erdungskontakts und zu einer Beeinträchtigung der Kontaktierung führen kann.

Der vorliegenden Erfindung liegt daher die Aufgabe zu Grunde, eine Kabelverschraubung der eingangs genannten Art dahingehend auszugestalten und weiterzubilden, dass sie möglichst klein baut, für Kabel mit deutlich unterschiedlichen Durchmessern eingesetzt werden kann und einen sicheren und zuverlässigen elektrischen Kontakt zu einem Schirm- oder Erdungskontakt eines eingeführten Kabels ermöglicht.

Zur Lösung dieser Aufgabe wird eine Kabelverschraubung mit den Merkmalen des Patentanspruchs 1 vorgeschlagen.

Die Kräfte zur Druckbeaufschlagung der Kontaktbügel bewirken eine radial nach innen gerichtete Bewegung der Kontaktbügel. Je weiter entfernt sich der Wirkbereich, auf den die Kräfte zur Druckbeaufschlagung der Kontaktbügel wirken, von dem zweiten Ende der Kontaktbügel befindet, desto größer ist der Weg, den die Kontaktbügel beim Aufschrauben des Druckelements zurücklegen können, und desto größer ist auch der Schirmkontaktbereich der Kabelverschraubung. Erfindungsgemäß wird also eine Kabelverschraubung vorgeschlagen, die trotz einer relativ kleinen Wirkfläche einen relativ großen Schirmkontaktbereich hat und somit auch für Kabel mit deutlich unterschiedlichen Durchmessern eingesetzt werden kann. Dabei wird ein Hebeleffekt ausgenutzt.

Ein weiterer Vorteil der erfindungsgemäßen Kabelverschraubung besteht darin, dass die Kräfte zur Druckbeaufschlagung der Kontaktbügel quer zu der Längserstreckung der Kontaktbügel und gleichzeitig in einem Abstand zu dem zweiten Ende der Kontaktbügel auf diese einwirken. Das hat zur Folge, dass die Kräfte zur Druckbeaufschlagung der Kontaktbügel nicht vollständig auf das zweite Ende der Kontaktbügel einwirken, sondern zum Teil auch ein vorzugsweise elastisches Verbiegen der Kontaktbügel bewirken. Auf diese Weise wird unabhängig von dem Durchmesser eines eingeführten Kabels eine sichere und zuverlässige Kontaktierung des Schirm- oder Erdungskontakts des Kabels ermöglicht und gleichzeitig eine Beschädigung des Schirm- oder Erdungskontakts wirkungsvoll verhindert.

Weitere Vorteile der erfindungsgemäßen Kabelverschraubung sind, dass ein eingeführtes Kabel bis zum Aufschrauben des Druckelements auf den Stutzen in der Kabelverschraubung frei axial hin- und herbewegt sowie gedreht werden kann, ohne dass sich die zweiten Enden der Kontaktbügel in dem insbesondere als Drahtgeflecht ausgebildeten Schirm- oder Erdungskontakt des Kabels verhaken. Das wird dadurch erzielt, dass die zweiten Enden der Kontaktbügel erst durch Aufschrauben des Druckelements mit dem Schirm- oder Erdungskontakt des Kabels in Kontakt treten.

Das Schirmkontaktelement und das Abstützelement sind parallel zu einer Längsachse der Kabelverschraubung relativ zueinander axial bewegbar. Ein Aufschrauben des Druckelements auf den Stutzen bewirkt eine axiale Relativbewegung zwischen dem Abstützelement und dem Schirmkontaktelement. Dabei wirkt das Abstützelement im Wirkbereich der Kontaktbügel derart mit diesen zusammen, dass die axiale Relativbewegung die Druckbeaufschlagung der Kontaktbügel bewirkt. Das Abstützelement kann beispielsweise als hülsenförmiger Vorsprung innerhalb des Stutzens ausgebildet sein. Das Abstützelement kann Teil des Stutzens oder ein gesondertes Bauteil sein. Besonders kostengünstig kann das Abstützelement beispielsweise als eine in den Stutzen einsetzbare Hülse ausgestaltet sein. Vorzugsweise ist das Abstützelement aus Metall oder Kunststoff gefertigt. Ein Aufschrauben oder Festschrauben des Druckelements auf dem Stutzen führt zu der axialen Relativbewegung, wobei das Abstützelement zumindest teilweise an dem Kontaktbügel entlang gleitet und dadurch eine Druckbeaufschlagung des Kontaktbügels bewirkt. Bei dieser Ausführungsform verschiebt sich während des Aufschraubens des Druckelements auf den Stutzen der Wirkbereich der Kontaktbügel in Richtung des ersten Endes der Kontaktbügel, wobei der Wirkbereich aber stets zwischen dem ersten und dem zweiten Ende liegt.

In einer bevorzugten Ausführungsform der Erfindung bewirkt die Druckbeaufschlagung der Kontaktbügel durch das Druckelement eine Kontaktierung der Kontaktbügel mit dem Schirm- oder Erdungskontakt des Kabels. Diese Ausführungsform gilt insbesondere, wenn in die Kabelverschraubung Kabel mit einem kleinen Außendurchmesser im unteren und mittleren Klemmbereich eingeführt werden. Durch das Verschrauben des Druckelements mit dem Stutzen wird üblicherweise erreicht, dass das Dichtungselement derart an das hindurchgeführte Kabel angelegt wird, dass das Kabel zugfest und dicht in der Kabelverschraubung gehalten wird. Bei der oben genannten Ausführungsform wird zusätzlich durch das Anziehen des Druckelements auf dem Stutzen die Kontaktierung der Kontaktbügel mit dem Schirm- oder Erdungskontakt des Kabels bewirkt. Vor dem Anziehen des Druckelements auf dem Stutzen sind die Kontaktbügel beabstandet zu dem Schirm- oder Erdungskontakt. Auf diese Weise kann eine Durchführung und Befestigung eines Kabels einschließlich der Herstellung eines elektrischen Kontakts zwischen der Kabelverschraubung und dem Schirm- oder Erdungskontakt des Kabels (Schirmung und/oder Erdung) besonders bequem und schnell vorgenommen werden. Vorteilhafterweise ist zumindest ohne Druckbeaufschlagung durch das Druckelement der Haltering um eine Längsachse der Kabelverschraubung axial verdrehbar in das Innere des Stutzens eingesetzt. Auf diese Weise kann auf einfache Weise eine axiale Verdrehbarkeit des eingeführten Kabels in der Kabelverschraubung erzielt werden, selbst wenn sich die Kontaktbügel mit ihren zweiten Enden mit dem Schirm- oder Kontaktelement verwickelt oder daran verhakt haben. Dadurch kann die Installation des Kabels deutlich vereinfacht und verbessert werden.

Diese Ausführungsform ist insbesondere von Vorteil, wenn in die Kabelverschraubung Kabel mit einem größeren Außendurchmesser im oberen Klemmbereich eingeführt werden. Dabei ist der Außendurchmesser der Kabel so groß, dass die zweiten Enden der Kontaktbügel bereits beim Einführen des Kabels an dem Schirm- oder Erdungskontakt des Kabels anliegen. Dank dieser Ausführungsform ist das Einführen des Kabels in die Kabelverschraubung und das Justieren des Kabels innerhalb der Kabelverschraubung selbst bei Kabeln mit relativ großen Außendurchmessern möglich. Durch eine drehbare Lagerung des Halterings und damit der Kontaktbügel können die Kontaktbügel und der Haltering zusammen mit einem eingeführten Kabel axial verdreht werden, ohne dass es zu einer Beschädigung des Schirm- oder Erdungskontakts kommen kann. Es ist denkbar, dass der Haltering mit den Kontaktbügeln bei Druckbeaufschlagung durch das Druckelement im Inneren des Stutzens festgelegt wird und nicht mehr axial verdrehbar ist.

Vorzugsweise ist zumindest ohne Druckbeaufschlagung durch das Druckelement der Haltering parallel zu einer Längsachse der Kabelverschraubung axial verschiebbar im Inneren des Stutzens angeordnet. Damit kann auf besonders einfache Weise ein Hin- und Herschieben eines in die Kabelverschraubung eingeführten Kabels parallel zu der Längsachse der Kabelverschraubung selbst dann ermöglicht werden, wenn die Kontaktbügel bereits ohne Anziehen des Druckelements auf dem Stutzen den Schirm- oder Erdungskontakt berühren. Außerdem kann dadurch auf einfache Weise eine axiale Verdrehbarkeit des eingeführten Kabels in der Kabelverschraubung erzielt werden.

In einer anderen vorteilhaften Weiterbildung der vorliegenden Erfindung ist zumindest ohne Druckbeaufschlagung durch das Druckelement das Abstützelement um eine Längsachse der Kabelverschraubung axial verdrehbar in das Innere des Stutzens eingesetzt. Vorteilhafterweise ist zumindest ohne Druckbeaufschlagung durch das Druckelement das Abstützelement parallel zu einer Längsachse der Kabelverschraubung axial verschiebbar im Inneren des Stutzens angeordnet. Durch diese Maßnahmen kann das Einführen eines Kabels in die Kabelverschraubung und das Hin- und Herbewegen des Kabels parallel zu einer Längsachse der Verschraubung sowie ein Drehen des Kabels um die Längsachse zur besseren Installation des Kabels deutlich verbessert werden.

Die Kontaktbügel sind auf annähernd ihrer gesamten Länge elastisch verformbar. Auf diese Weise wird unabhängig von dem Außendurchmesser eines in die Verschraubung eingeführten Kabels stets eine sichere und zuverlässige Kontaktierung der Kontaktbügel mit dem Schirm- oder Erdungskontakt des Kabels ermöglicht. Außerdem kann dadurch der besonders große Schirmkontaktbereich der erfindungsgemäßen Kabelverschraubung auf einfache Weise realisiert werden.

Die Kontaktbügel sind an ihrem zweiten Ende kufenförmig ausgebildet, wobei die Kontaktbügel mit der Außenseite der Kufe den Schirm- oder Erdungskontakt des eingeführten Kabels kontaktieren. Eine derartig kufenförmige Ausgestaltung der Kontaktbügel verhindert besonders wirkungsvoll, dass sich die Kontaktbügel bei einer Längsbewegung des Kabels innerhalb der Kabelverschraubung parallel zu der Längsachse der Verschraubung mit dem Kabel, insbesondere mit dem Schirm- oder Erdungskontakt des Kabels, verwickeln oder verhaken. Durch diese Maßnahme kann also eine freie axiale Verschiebbarkeit des Kabels in der Verschraubung verbessert werden.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. Es zeigen:
- Figur 1: eine Kabelverschraubung mit eingeführtem Kabel bei noch nicht hergestelltem Kontakt der Kontaktbügel mit dem Schirm- oder Erdungskontakt;
- Figur 2: die Kabelverschraubung aus Figur 1, wobei die Kontaktbügel den Schirm- oder Erdungskontakt des Kabels kontaktieren;
- Figur 3: die Kabelverschraubung aus Figur 1 und 2, wobei das eingeführte Kabel einen größeren Durchmesser als das in den Figuren 1 und 2 dargestellte Kabel aufweist; und
- Figur 4: die Kabelverschraubung aus Figur 3 mit weiter aufgeschraubtem Druckelement.

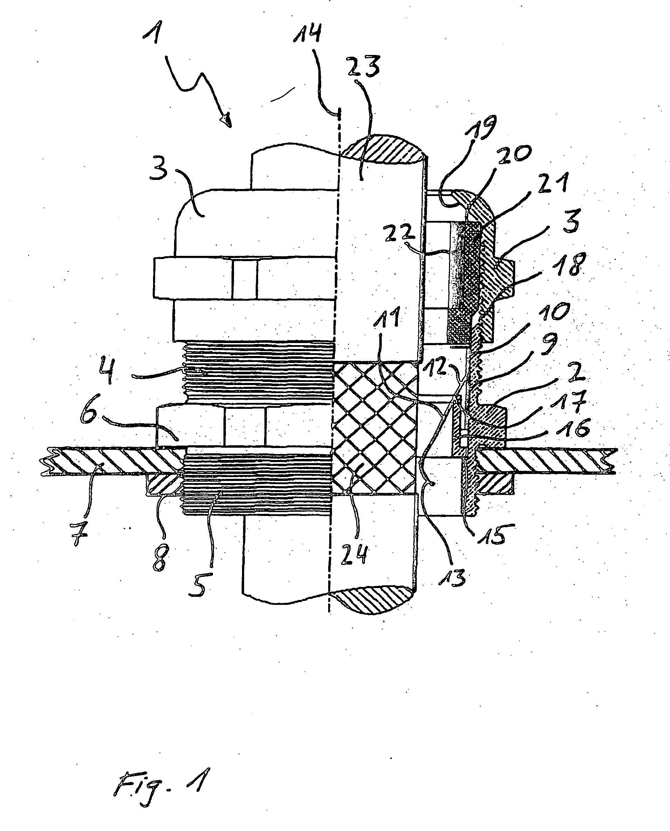

In Figur 1 ist eine in ihrer Gesamtheit mit dem Bezugszeichen 1 versehene Kabelverschraubung dargestellt, die einen hohlzylinderförmigen Stutzen 2 und ein hohlzylinderförmiges Druckelement 3 aufweist. Der Stutzen 2 weist ein erstes Außengewinde 4, ein zweites Außengewinde 5 sowie einen Kragen 6 auf. Der Kragen weist ein 6-Kant-förmiges Außenprofil auf. Der Stutzen 2 ist an einem Gehäuse 7 durch Zusammenwirken des Kragens 6 und einer auf das zweite Außengewinde 5 aufgeschraubten Gegenmutter 8 befestigt. Alternativ kann an dem Innenumfang einer Öffnung in dem Gehäuse 7 auch ein Innengewinde vorgesehen sein, so dass die Kabelverschraubung 1 mit ihrem Außengewinde 5 in die Öffnung geschraubt werden kann.

In dem Stutzen 2 ist ein Schirmkontaktelement 9 angeordnet, das einen Haltering 10 und Kontaktbügel 11 aufweist. Die Kontaktbügel 11 sind mit einem ersten Ende 12 an dem Haltering 10 befestigt und weisen ein kufenförmig ausgestaltetes zweites Ende 13 auf. Das Schirmkontaktelement 11 ist als gesondertes Bauteil ausgeführt und derart in dem Stutzen 2 angeordnet, dass eine Drehung des Schirmkontaktelements 11 um eine Achse 14 der Kabelverschraubung 1 möglich ist.

In der Innenseite des Stutzens 2 ist ein Vorsprung 15 ausgebildet, an dem ein in dem Stutzen 2 angeordnetes, hülsenförmig ausgebildetes Abstützelement 16 in axialer Richtung (bezüglich der Achse 14) zur Anlage gebracht ist. In einem Wirkbereich 17 der Kontaktbügel 11 berührt das Abstützelement 16 die Kontaktbügel 11. Das Abstützelement 16 ist ebenfalls als gesondertes Bauteil ausgeführt und derart angeordnet, dass eine Drehung des Abstützelements 16 um die Achse 14 innerhalb der Kabelverschraubung 1 möglich ist.

Das Schirmkontaktelement 9 und das Abstützelement 16 sind ferner derartig ausgebildet und in dem Stutzen 2 angeordnet, dass sie relativ zueinander in axialer Richtung (bezüglich der Achse 14) bewegt werden können.

Das Druckelement 3 weist an einem gehäuseseitigen Ende ein Innengewinde 18 und an einem dem Gehäuse 7 abgewandten Ende eine konisch ausgebildete Innenfläche 19 auf. Das Druckelement 3 wird auf den Stutzen 2 aufgesetzt, so dass das Innengewinde 18 des Druckelements 3 mit dem ersten Außengewinde 4 des Stutzens 2 in Eingriff tritt. Ein hülsenförmiges Dichtungselement 20 umfasst einen Dichtungsträger 21 und eine Dichtung 22. Mit dem Dichtungsträger 21 ist das Dichtungselement 20 in dem Stutzen 2 angeordnet. Innerhalb des Druckelements 3 ist der Teil des Dichtungselements 20 mit der Dichtung 22 angeordnet.

Durch die Kabelverschraubung 1 ist ein Kabel 23 geführt. Das Kabel 23 weist einen Durchmesser im unteren oder mittleren Klemmbereich auf. Das Kabel 23 ist als ein Schirm- oder Erdungskabel ausgebildet und weist eine äußere Isolation auf. In einem Bereich des Kabels 23, der von den Kontaktbügeln 11 mit ihren zweiten Enden 13 kontaktiert wird, ist die äußere Isolation entfernt, so dass ein Schirm- oder Erdungskontakt 24 freigelegt ist. Der Schirm- oder Erdungskontakt 24 ist beispielsweise als ein Drahtgeflecht ausgebildet.

Im folgenden wird die Funktionsweise der erfindungsgemäßen Kabelverschraubung 1 näher erläutert:

Die Kabelverschraubung 1 ist dafür vorgesehen, das Kabel 23 an dem Gehäuse 7, das beispielsweise Teil eines Schaltschranks ist, zu befestigen und gleichzeitig zu gewährleisten, dass ein niederohmiger elektrischer Kontakt von dem Schirm- oder Erdungskontakt 24 zu dem Gehäuse 7 hergestellt wird. Dazu wird der Stutzen 2 mit dem zweiten Außengewinde 5 von der Außenseite des Gehäuses 7 in eine in das Gehäuse 7 eingebrachte Öffnung eingeführt und mit dem Kragen 6 an der Außenseite des Gehäuses 7 zur Anlage gebracht. Von der Innenseite des Gehäuses 7 wird die Gegenmutter 8 auf das in das Innere des Gehäuses 7 ragende zweite Außengewinde 5 des Stutzens 2 aufgesetzt und verschraubt. Dadurch wird der Stutzen 2 fest mit dem Gehäuse verklemmt.

In den Stutzen 2 wird zunächst von der dem Gehäuse 7 abgewandten Seite des Stutzens 2 das Abstützelement 16 in den Stutzen 2 soweit eingeführt, bis es an dem Vorsprung 15 zur Anlage kommt. Anschließend wird das Schirmkontaktelement 9 in den Stutzen 2 eingesetzt.

Das Druckelement 3 wird auf den Stutzen 2 derart aufgesetzt, dass das Innengewinde 18 des Druckelements 3 mit dem ersten Außengewinde 12 des Stutzens 2 in Eingriff kommt. Wird das Druckelement 3 nun auf den Stutzen 2 aufgeschraubt, so bewirkt dies eine axiale Verkürzung (bezüglich der Achse 14) der Kabelverschraubung 1. Infolgedessen bewegt sich das Dichtungselement 20 - abgestützt durch die konische Innenfläche 19 - in axialer Richtung auf das Schirmkontaktelement 9 zu, bis sich das Dichtungselement 20 und das Schirmkontaktelement 9 berühren.

Ein weiteres Aufschrauben des Druckelements 3 auf den Stutzen 2 führt dazu, dass sich das Schirmkontaktelement 9 bezüglich der Achse 14 axial auf das Abstützelement 16 zu bewegt und das Abstützelement 16 schließlich die Kontaktbügel 11 in dem Wirkbereich 17 berührt.

Es ist vorgesehen, dass spätestens jetzt das Kabel 23 in die erfindungsgemäße Kabelverschraubung 1 eingeführt und durch diese hindurchgeführt wird. Zweckmäßigerweise wird zuvor ein Teil der Isolation entfernt und der Schirm- oder Erdungskontakt 24 des Kabels 23 freigelegt.

Weist das Kabel 23 einen Durchmesser im unteren oder mittleren Klemmbereich auf, so berühren die Kontaktbügel 11 das hindurchgeführte Kabel 23 und insbesondere den Schirm- oder Erdungskontakt 24 noch nicht. Dadurch ist gewährleistet, dass das Kabel 23 frei innerhalb der Kabelverschraubung bewegt und justiert werden kann. Insbesondere wird dadurch erreicht, dass sich die Kontaktbügel 11 nicht mit dem Drahtgeflecht des Schirm- oder Erdungskontakts 24 verwickeln oder verhaken können, was andernfalls zu einer Beschädigung des Schirm- oder Erdungskontakts 24 und/oder der Kontaktbügel 11 und zu einer Beeinträchtigung des elektrischen Kontakts zwischen Kontaktbügeln 11 und Schirm- oder Erdungskontakt 24 führen könnte.

Ein noch weiteres Aufschrauben des Druckelements 3 auf den Stutzen 2 hat zur Folge, dass sich das Schirmkontaktelement 9 weiter in axialer Richtung auf das Abstützelement 16 zu bewegt. Da das Abstützelement 16 an einer ebenso gerichteten und damit dem Schirmkontaktelement 9 ausweichenden Bewegung durch den Vorsprung 15 gehindert wird, bewirkt dies, dass die Kontaktbügel 11 in dem Wirkbereich 17 durch das Abstützelement 16 mit einer Kraft beaufschlagt werden. Gleichzeitig wird die Dichtung 22 des Dichtungselements 20 auf die Isolation des Kabels 23 gedrückt.

Da die Kontaktbügel 11 mit dem ersten Ende 12 an dem Haltering 10 befestigt sind, bewirkt die durch das Abstützelement 16 auf die Kontaktbügel 11 wirkende Kraft eine radial nach innen gerichtete Bewegung (Auslenkung) der Kontaktbügel 11.

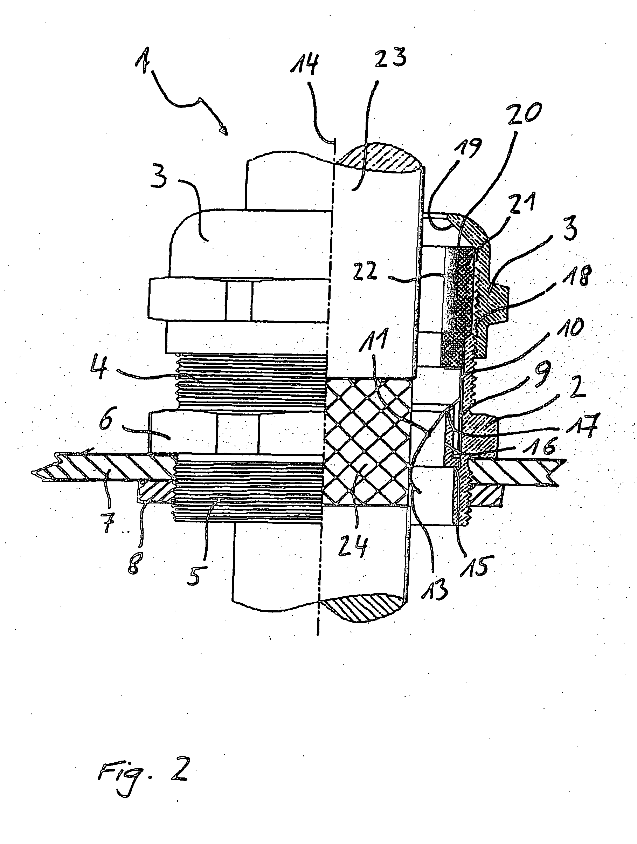

Diese Situation ist in Figur 1 dargestellt. Dort bewirkt die Beaufschlagung der Kontaktbügel 11 durch das Abstützelement 16 eine radial nach innen gerichtete Auslenkung der Kontaktbügel 11. Durch ein noch weiteres Aufschrauben des Druckelements 3 auf den Stutzen 2 werden die Kontaktbügel 11 soweit radial nach innen ausgelenkt, dass sie den Schirm- oder Erdungskontakt 24 des Kabels 23 berühren und schließlich mit einer Kraft auf diesen einwirken. Eine derartige Situation ist in Figur 2 dargestellt.

In dem in Figur 2 dargestellten Ausführungsbeispiel sind die Kontaktbügel 11 in ihrer gesamten Länge elastisch ausgestaltet und berühren in einem Kontaktbereich 25 den Schirm- oder Erdungskontakt 24. Da das Druckelement 3 weiter auf den Stutzen 2 aufgeschraubt ist als in der in Figur 1 dargestellten Situation, hat sich auch das Schirmkontaktelement 9 weiter auf das Abstützelement 16 zu bewegt. In Folge dessen ist das Abstützelement 16 an den Kontaktbügeln 11 derart entlanggeglitten, dass der Wirkbereich 17, in dem das Abstützelement 16 die Kontaktbügel 11 berührt, weiter in Richtung der ersten Enden 12 der Kontaktbügel 11 verlagert ist.

In Folge der elastischen Ausgestaltung der Kontaktbügel 11 kann die in dem Wirkbereich 17 auf die Kontaktbügel 11 wirkende Kraft teilweise durch eine in Figur 2 dargestellte Verformung der Kontaktbügel 11 kompensiert werden. Somit wird erreicht, dass die Kontaktbügel 11 auch bei einer vollständig verschraubten Kabelverschraubung 1 nicht mit einer derartig großen Kraft in dem Kontaktbereich 25 auf den Schirm- oder Erdungskontakt 24 einwirken, dass eine Beschädigung des Schirm- oder Erdungskontakts 24 oder der Kontaktbügel 11 erfolgen kann.

Eine weitere Folge der Verformung der Kontaktbügel 11 und der oben beschriebenen Verlagerung des Wirkbereiches 17 ist, dass sich die Kontaktbügel 11 mit ihrem zweiten Ende 13 großflächiger auf den Schirm- oder Erdungskontakt 24 legen und dadurch der Kontaktbereich 25, in welchem die Kontaktbügel 11 den Schirm- oder Erdungskontakt 24 berühren, vergrößert wird, wenn das Druckelement 3 weiter auf den Stutzen 2 aufgeschraubt wird. Damit wird der elektrische Kontakt zwischen den Kontaktbügeln 11 und dem Schirm- oder Erdungskontakt 24 verbessert.

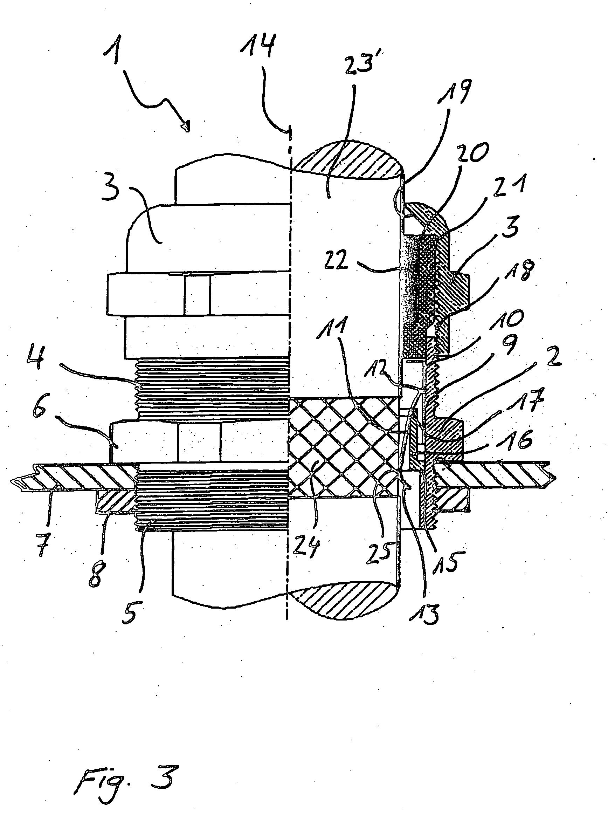

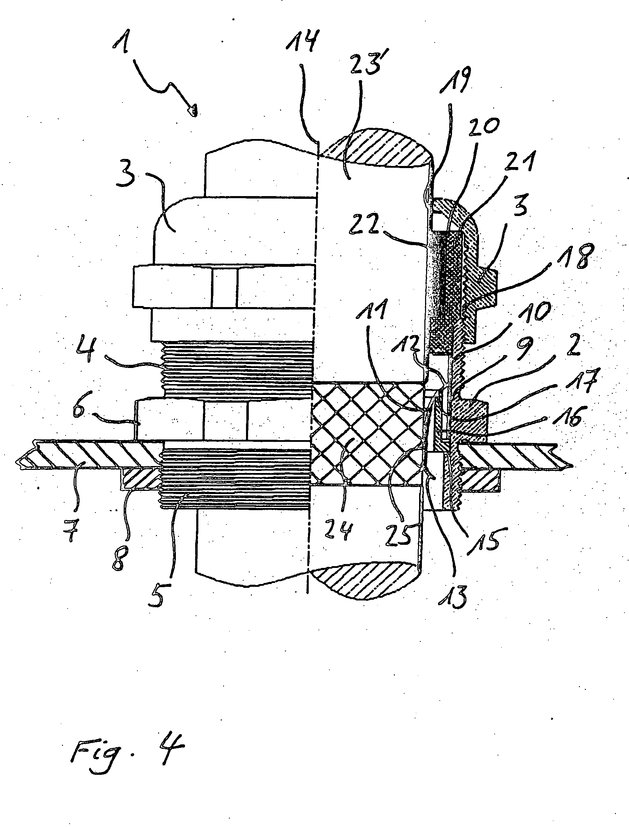

In den Figuren 3 und 4 ist die Kabelverschraubung 1 aus den Figuren 1 und 2 dargestellt, durch die ein Kabel 23' hindurchgeführt ist. Das Kabel 23' weist einen besonders großen Durchmesser auf, der im oberen Klemmbereich der Kabelverschraubung 1 und bei nicht mit dem Stutzen 2 verschraubtem Druckelement 3 gerade noch durch die Dichtung 22 geführt werden kann.

In Figur 3 ist das Druckelement 3 wenige Gewindegänge auf den Stutzen 2 aufgeschraubt. Wie oben beschrieben, führt dies zu einer Beaufschlagung der Kontaktbügel 11 mit der Kraft in den Wirkbereichen 17 durch das Abstützelement 16. Im Unterschied zu der in Figur 1 beschriebenen Situation berühren jedoch in der in Figur 3 dargestellten Situation bereits in diesem Zustand die Kontaktbügel 11 den Schirm- oder Erdungskontakt 24 des Kabels 23' aufgrund des relativ großen Durchmessers des Kabels 23'.

Dennoch ist auch in der in Figur 3 dargestellten Situation ein Bewegen des Kabels 23' innerhalb der erfindungsgemäßen Kabelverschraubung 1 möglich, ohne dass eine Beschädigung des Schirm- oder Erdungskontakts 24 bzw. der Kontaktbügel 11 erfolgt. Dies wird dadurch erreicht, dass die zweiten Enden 13 der Kontaktbügel 11 kufenförmig ausgestaltet sind. Somit wird trotz der den Schirm- oder Erdungskontakt 24 berührenden Kontaktbügel 11 eine axiale (bezüglich der Achse 14) Bewegung des Kabels 23' innerhalb der Kabelverschraubung 1 ermöglicht, ohne dass ein Verhaken einzelner Schlingen des Schirm- oder Erdungskontakts 24 mit den Kontaktbügeln 11 erfolgt.

Durch die erfindungsgemäße Drehbarkeit des Schirmkontaktelements 9 und des Abstützelements 16 bezüglich der Achse 14 ist ferner trotz der den Schirm- oder Erdungskontakt 24 berührenden Kontaktbügel 11 eine Drehung des Kabels 23' bezüglich der Achse 14 innerhalb der Kabelverschraubung 1 möglich, ohne dass eine Beschädigung des Schirm- oder Erdungskontakts 24 oder der Kontaktbügel 11 erfolgt. Wird beispielsweise bei einem Justieren des Kabels 23' innerhalb der Kabelverschraubung 1 das Kabel um die Achse 14 verdreht und kontaktieren die Kontaktbügel 11 den Schirm- oder Erdungskontakt 24 des Kabels 23' wie in Figur 3 dargestellt, so bewirkt dies ebenfalls zumindest eine Drehung des Schirmkontaktelements 9 um die Achse 14. In Abhängigkeit verschiedener Reibwerte, beispielsweise von der Größe einer Haftreibung, die in dem Wirkbereich 17 zwischen den Kontaktbügeln 11 und dem Abstützelement 16 besteht, kann bei der oben beschriebenen Verdrehung des Kabels 23' auch eine Verdrehung des Abstützelements 16 erfolgen.

In Figur 4 ist das Druckelement 3 noch weiter auf den Stutzen 2 aufgeschraubt. Wie oben beschrieben, verlagert sich dabei der Wirkbereich 17 weiter in Richtung der ersten Enden 12 der Kontaktbügel 11. Durch den besonders großen Durchmesser des Kabels 23' einerseits und die elastisch verformbare Ausgestaltung der Kontaktbügel 11 andererseits werden die Kontaktbügel 11 in Folge der Einwirkung des Abstützelements 16 dahingehend verformt, dass sie in einem relativ großen Bereich annähernd parallel zu der Achse 14 ausgerichtet sind. Dadurch vergrößert sich insbesondere auch der Kontaktbereich 25, mit dem die Kontaktbügel 11 den Schirm- oder Erdungskontakt 24 berühren. Die Vergrößerung des Kontaktbereichs 25 wiederum erhöht die elektrische Leitfähigkeit zwischen dem Schirm- und Erdungskontakt 24 und dem Schirmkontaktelement 9. Somit kann eine erfindungsgemäße Kabelverschraubung 1 auch dann noch gut eingesetzt werden, wenn der Durchmesser des Kabels 23' im oberen Klemmbereich.

Durch die besonders große, radial nach innen gerichtete Auslenkbarkeit (sog. Schirmkontaktbereich) der Kontaktbügel 11 kann auch bei einem besonders dünnen Kabel 23 noch ein ausreichender Kontakt der Kontaktbügel 11 mit dem Schirm- oder Erdungskontakt 24 des Kabels 23 erreicht werden.

Eine elastische und rückfedernde Ausgestaltung der Kontaktbügel 11 ermöglicht es, das mittels der Kabelverschraubung 1 verschraubte Kabel 23, 23' besonders bequem und ohne Beschädigung der Kontaktbügel 11 bzw. des Schirm- oder Erdungskontakts 24 wieder aus der Kabelverschraubung 1 zu entfernen, da sich die Kontaktbügel 11 beim Lösen des Druckelements 3 von dem Stutzen 2 wieder von dem Schirm- oder Erdungskontakt 24 lösen und in ihre ursprüngliche Ausgangslage zurückkehren. Insbesondere wird dadurch auch ermöglicht, eine erfindungsgemäße Kabelverschraubung 1 besonders einfach wiederzuverwenden.

Selbstverständlich ist es vorstellbar, die Kontaktbügel 11 lediglich plastisch verformbar auszugestalten. Eine derartige Ausführungsform kann beispielsweise eingesetzt werden, wenn nicht davon auszugehen ist, dass das mit der Kabelverschraubung 1 verschraubte Kabel 23, 23' aus der Kabelverschraubung 1 wieder entfernt werden soll. Des weiteren können die Kontaktbügel 11 auch starr ausgebildet sein und radial nach innen verschwenkbar an dem Haltering 10 befestigt sein.

Außerdem ist es vorstellbar, die Reihenfolge einzelner Schritte der oben dargestellten Verwendung der Kabelverschraubung 1 zu verändern. Beispielsweise können das Abstützelement 16 und das Schirmkontaktelement 9 in den Stutzen eingesetzt werden, bevor der Stutzen 2 mit dem Gehäuse 7 verschraubt wird. Ebenso ist es vorstellbar, die Kabelverschraubung 1 mit dem Gehäuse 7 zu verschrauben, nachdem das Kabel 23 in der Kabelverschraubung 1 verklemmt ist.

Es ist ferner vorstellbar, eine Anordnung des Abstützelements 16 in dem Stutzen 2 derart vorzusehen, dass das Abstützelement 16 fest mit dem Stutzen 2 verbunden ist und folglich bei einer Verwendung der Kabelverschraubung 1 nicht in diese eingesetzt werden muss. Dies kann beispielsweise dadurch erreicht werden, dass das Abstützelement 16 einstückig mit dem Stutzen verbunden ist und innerhalb des Stutzens 2 aus diesem, beispielsweise durch Fräsen, herausgearbeitet ist.

Die oben dargestellte Beschreibung ergibt, dass der Bereich der Durchmesser von Kabeln, zu deren Durchführung, Befestigung, Schirmung und/oder Erdung eine erfindungsgemäße Kabelverschraubung 1 eingesetzt werden kann, besonders groß ist.

## Patentansprüche

1. Kabelverschraubung (1), insbesondere für ein Abschirm- oder Erdungskabel, umfassend einen mit einem Gehäuse (7) verbindbaren Stutzen (2) und ein mit dem Stutzen (2) verschraubbares Druckelement (3), das auf ein Dichtungselement (20) im Sinne eines Anlegens des Dichtungselements (20) an ein durch die Kabelverschraubung (1) hindurchgeführtes Kabel (23; 23') einwirkt, sowie ein in das Innere des Stutzens (2) einsetzbares Schirmkontaktelement (9), das in einer elektrischen Verbindung mit dem Stutzen (2) steht und mindestens einen Kontaktbügel (11) aufweist, auf den das Druckelement (3) im Sinne einer radial nach innen gerichteten Druckbeaufschlagung einwirkt, wobei der mindestens eine Kontaktbügel (11) des Schirmkontaktelements (9) ein erstes Ende (12), mit dem er an einem in das Innere des Stutzens (2) einsetzbaren Haltering (10) befestigt ist, und ein zweites Ende (13) zur Kontaktierung eines Schirm- oder Erdungskontakts (24) des Kabels (23; 23') aufweist, **dadurch gekennzeichnet, dass** der mindestens eine Kontaktbügel (11) einen Wirkbereich (17) zwischen dem ersten Ende (12) und dem zweiten Ende (13) des mindestens einen Kontaktbügels (11) aufweist, der zu dem ersten Ende (12) und zu dem zweiten Ende (13) beabstandet ist und mit einem innerhalb des Stutzens (2) angeordneten Abstützelement (16) zusammenwirkt, wobei die Kräfte zur Druckbeaufschlagung des mindestens einen Kontaktbügels (11) über das Abstützelement (16) auf den Wirkbereich (17) des mindestens einen Kontaktbügels (11) wirken, dass die Kontaktbügel (11) auf annähernd der gesamten Länge elastisch radial nach innen verformbar sind, und dass die Kontaktbügel (11) an ihrem zweiten Ende (13) kufenförmig ausgebildet sind, wobei die Kontaktbügel (11) mit der Außenseite der Kufe den Schirm- oder Erdungskontakt (24) des Kabels (23; 23') kontaktieren.

2. Kabelverschraubung (1) nach Anspruch 1, **dadurch gekennzeichnet, dass** das Schirmkontaktelement (9) und das Abstützelement (16) parallel zu einer Längsachse (14) der Kabelverschraubung (1) relativ zueinander axial bewegbar sind, dass ein Anziehen des Druckelements (3) auf dem Stutzen (2) eine axiale Relativbewegung zwischen dem Abstützelement (16) und dem Schirmkontaktelement (9) bewirkt, und dass das Abstützelement (16) in dem Wirkbereich (17) der Kontaktbügel (11) derart mit diesen zusammenwirkt, dass die axiale Relativbewegung die Druckbeaufschlagung der Kontaktbügel (11) bewirkt.

3. Kabelverschraubung (1) nach Anspruch 1 oder 2, **dadurch gekennzeichnet, dass** die Druckbeaufschlagung der Kontaktbügel (11) durch das Druckelement (3) eine Kontaktierung der Kontaktbügel (11) mit dem Schirm- oder Erdungskontakt (24) des Kabels (23; 23') bewirkt.

4. Kabelverschraubung (1) nach einem der Ansprüche 1 - 3, **dadurch gekennzeichnet, dass** zumindest ohne Druckbeaufschlagung durch das Druckelement (3) der Haltering (10) um eine Längsachse (14) der Kabelverschraubung (1) axial verdrehbar in das Innere des Stutzens (2) eingesetzt ist.

5. Kabelverschraubung (1) nach Anspruch 4, **dadurch gekennzeichnet, dass** zumindest ohne Druckbeaufschlagung durch das Druckelement (3) der Haltering (10) parallel zu einer Längsachse (14) der Kabelverschraubung (1) axial verschiebbar im Inneren des Stutzens (2) angeordnet ist.

6. Kabelverschraubung (1) nach einem der vorangehenden Ansprüche, **dadurch gekennzeichnet, dass** zumindest ohne Druckbeaufschlagung durch das Druckelement (3) das Abstützelement (16) um eine Längsachse (14) der Kabelverschraubung (1) axial verdrehbar in das Innere des Stutzens (2) eingesetzt ist.

7. Kabelverschraubung (1) nach Anspruch 6, **dadurch gekennzeichnet, dass** zumindest ohne Druckbeaufschlagung durch das Druckelement (3) das Abstützelement (16) parallel zu einer Längsachse (14) der Kabelverschraubung (1) axial verschiebbar im Inneren des Stutzens (2) angeordnet ist.

## Claims

1. Cable gland (1), in particular for a screening or earthing cable, comprising a nozzle (2) which can be connected to a housing (7) and a pressure element (3) which can be screwed to the nozzle (2) and acts on a sealing element (20) by placing the sealing element (20) against a cable (23; 23') led through the cable gland (1), and a screen contact element (9) which can be inserted into the interior of the nozzle (2), has an electrical connection to the nozzle (2) and has at least one contact bow (11) on which the pressure element (3) acts by exerting a pressure directed radially inwards, the at least one contact bow (11) of the screen contact element (9) having a first end (12), with which it is fixed to a retaining ring (10) which can be inserted into the interior of the nozzle (2), and a second end (13) for contacting a screen contact or earth contact (24) of the cable (23; 23'), **characterized in that** the at least one contact bow (11) has an operative region (17) between the first end (12) and the second end (13) of the at least one contact bow (11), which operative region is a distance away from the first end (12) and from the second end (13) and cooperates with a support element (16), the forces for exerting a pressure on the at least one contact bow (11) acting via the support element (16) on the operative region (17) of the at least one contact bow (11),
**in that** the contact bows (11) are elastically deformable radially inwards over almost the total length and
**in that** the contact bows (11) are in the form of skids at their second end (13), the outside of the skid of the contact bows (11) making contact with the screen or earth contact (24) of the cable (23; 23').

2. Cable gland (1) according to Claim 1, **characterized in that** the screen contact element (9) and the support element (16) are moveable axially relative to one another parallel to the longitudinal axis (14) of the cable gland (1), **in that** tightening of the pressure element (3) on the nozzle (2) produces an axial relative movement between the support element (16) and the screen contact element (9), and **in that**, in the operative region (17) of the contact bows (11), the support element (11) cooperates with said contact bows in such a way that the axial relative movement exerts the pressure on the contact bows (11).

3. Cable gland (1) according to Claim 1 or 2, **characterized in that** the exertion of pressure on the contact bows (11) by the pressure element (3) results in contact between the contact bows (11) and the screen or earth contact (24) of the cable (23; 23').

4. Cable gland (1) according to any of Claims 1-3, **characterized in that**, at least without exertion of pressure by the pressure element (3), the retaining ring (10) is inserted into the interior of the nozzle (2) so as to be axially rotatable about a longitudinal axis (14) of the cable gland (1).

5. Cable gland (1) according to Claim 4, **characterized in that**, at least without exertion of pressure by the pressure element (3), the retaining ring (10) is arranged parallel to a longitudinal axis (14) of the cable gland (1) so as to be axially displaceable in the interior of the nozzle (2).

6. Cable gland (1) according to any of the preceding Claims, **characterized in that**, at least without exertion of pressure by the pressure element (3), the support element (16) is inserted into the interior of the nozzle (2) so as to be axially rotatable about a longitudinal axis (14) of the cable gland (1).

7. Cable gland (1) according to Claim 6, **characterized in that**, at least without exertion of pressure by the pressure element (3), the support element (16) is arranged parallel to a longitudinal axis (14) of the cable gland (1) so as to be axially rotatable in the interior of the nozzle (2).

## Revendications

1. Passe-câble vissé (1), notamment pour un câble blindé ou un câble de masse, comprenant un embout (2) relié à un boîtier (7) et un élément de poussée (3) vissé à l'embout (2), s'appuyant sur un élément d'étanchéité (20) pour appliquer cet élément d'étanchéité (20) contre un câble (23, 23') traversant le passe-câble vissé (1), ainsi qu'un élément de contact de blindage (9) placé à l'intérieur de l'embout (2), et en liaison électrique avec l'embout (2) et comportant au moins une patte de contact (11) sur laquelle agit l'élément de poussée (3) dans le sens de l'application d'une pression dirigée radialement vers l'intérieur,
au moins une patte de contact (11) de l'élément de contact de blindage (9) ayant une première extrémité (12) par laquelle elle est fixée à une bague de fixation (10) placée à l'intérieur de l'embout (2) et une seconde extrémité (13) pour toucher un contact de blindage ou de masse (24) du câble (23, 23'),
**caractérisé en ce que**
la patte (11) présente une zone active (17) entre sa première extrémité (12) et sa seconde extrémité (13), cette zone étant écartée de la première extrémité (12) et de la seconde extrémité (13) et coopère avec un élément d'appui (16), ces forces pour appliquer la pression sur au moins cette patte de contact (11) agissant par l'intermédiaire de l'élément d'appui (16) sur la zone active (17) de cet élément de contact (11), **en ce que** la patte de contact (11) est déformable élastiquement, radialement vers l'intérieur, pratiquement sur toute sa longueur et **en ce que** la patte de contact (11) a une seconde extrémité (13) en forme de patin et la patte de contact (11) vient en contact par le côté extérieur du patin contre le contact de blindage ou de masse (24) du câble (23, 23').

2. Passe-câble vissé (1) selon la revendication 1,
**caractérisé en ce que** l'élément de contact de blindage (9) et l'élément d'appui (16) sont mobiles axialement l'un par rapport à l'autre parallèlement à l'axe longitudinal (14) du passe-câble vissé (1), et le serrage de l'élément de poussée (3) sur l'embout (2) produit un mouvement axial relatif entre l'élément d'appui (16) et l'élément de contact de blindage (9) et l'élément d'appui (16) coopère dans la zone active (17) de la patte de contact (11) avec celle-ci pour que le mouvement axial relatif sollicite la patte de contact (11) en pression.

3. Passe-câble vissé (1) selon la revendication 1 ou 2,
**caractérisé en ce que** l'application de la pression sur la patte de contact (11) par l'élément de poussée (3) produit la mise en contact de la patte de contact (11) avec le contact de blindage ou de masse (24) du câble (23, 23').

4. Passe-câble vissé (1) selon l'une des revendications 1 à 3,
**caractérisé en ce que** la bague de fixation (10) est placée de façon à tourner axialement autour de l'axe longitudinal (14) du passe-câble vissé (1) à l'intérieur de l'embout (2) au moins sans appliquer de pression par l'élément de poussée (3).

5. Passe-câble vissé (1) selon la revendication 4,
**caractérisé en ce que** la bague de fixation (10) coulisse à l'intérieur de l'embout (2), axialement, parallèlement à l'axe longitudinal (14) du passe-câble vissé (1) au moins sans appliquer de pression par l'élément de poussée (3).

6. Passe-câble vissé (1) selon l'une des revendications précédentes,
**caractérisé en ce que** l'élément d'appui (16) est placé en tournant axialement à l'intérieur de l'embout (2) autour de l'axe longitudinal (14) du passe-câble vissé (1) au moins sans appliquer de pression par l'élément de poussée (3).

7. Passe-câble vissé (1) selon la revendication 6,
**caractérisé en ce que** l'élément d'appui (16) coulisse axialement à l'intérieur de l'embout (1), parallèlement à l'axe longitudinal (14) du passe-câble vissé (1) au moins sans appliquer de pression par l'élément de poussée (3).
